# EUROPEAN PATENT APPLICATION

(11) **EP 4 811 266 A1**
(43) Date of publication of application: **23.09.2026**
(21) Application number: 24907624.1
(22) Date of filing: 28.05.2024
(51) Int. Cl.: G06Q 50/10, G06Q 10/10, G06Q 50/50

(54) **MULTI-SAMPLE TEST SYSTEM FOR INCREASING UTILIZATION OF LABORATORY CHAMBER EQUIPMENT**

(30) Priority: 19.12.2023 KR 20230185637; 20.03.2024 KR 20240038291
(71) Applicant: Jeio Tech Co., Ltd., Daejeon 34025 (KR)
(72) Inventor: KIM, Gi Sung, Daejeon 34032 (KR); SHIN, Hyun Joo, Daejeon 34032 (KR)
(74) Representative: BCKIP Part mbB
(86) International application number: PCT/KR2024/007231
(87) International publication number: WO 2025/135332

(57) **Abstract**

The present invention relates to a multi-sample test system for increasing the utilization of chamber equipment used in laboratories in the bio or pharmaceutical field. The present invention has an advantage in that when a plurality of samples having different test end times are simultaneously tested in one piece of test equipment, a test end time point of each sample is distinguished and the test end is notified to a terminal of a user testing the corresponding sample, thereby increasing the utilization of the test equipment and reducing a conventional burden for testers to individually memorize a test end time point.

## Description

### TECHNICAL FIELD

The present invention relates to a technique for efficiently utilizing test equipment used in the fields of biology or pharmaceuticals.

### BACKGROUND ART

In laboratories such as those in the fields of biology or pharmaceuticals, a wide range of tests are conducted using reagents, samples, etc.

However, although there are many users who wish to conduct the tests in the laboratory, available equipment is limited due to spatial and physical constraints. Thus, if a specific person is using particular test equipment, other testers have to wait until the test is completed. However, if test conditions are the same, and there is sufficient space in the laboratory equipment, the tester waiting to conduct the test will likely proceed with their own test without having to wait for the test of another tester who is already using the equipment to be completed. In this case, since an end time of the test for the tester who started first and an end time for the test who started later are different from each other, each tester always has an inconvenience of having to monitor its own test's end time.

The current test equipment may be divided into equipment that requires login and equipment that does not require login. As digital information becomes increasingly important, it is a trend to record information such as "who conducted which test" in the test equipment.

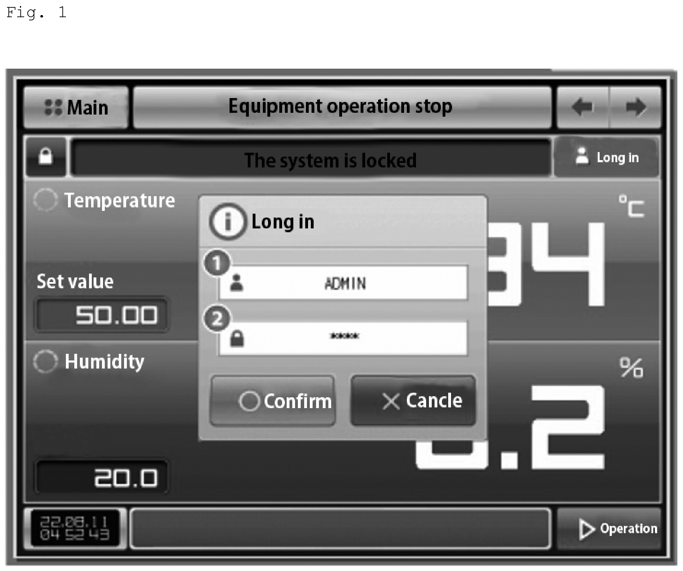

Thus, even if the test conditions are the same, as illustrated in FIG. 1, when a specific person logs in to occupy the test equipment, other persons are unable to use the equipment. Even if the user requests permission from those who are already using the equipment and agrees to use the equipment together, since start times of the tests are different from each other, the end times will also be different. Thus, the user has to individually monitor the end time of their own tests.

Furthermore, since the tests on photostability of pharmaceutical raw materials or finished products may take several months, the user has an inconvenience of having to memorize the end times of the tests.

### DISCLOSURE OF THE INVENTION

### TECHNICAL PROBLEM

The present invention has been invented to overcome the problems of the related art, and an object of the present invention is to provide a system that enables a user to conduct tests simultaneously using a single piece of test equipment, and separates and notifies a test end for each user or for each sample, thereby increasing utilization of laboratory equipment.

### TECHNICAL SOLUTION

A multi-sample test system for increasing utilization of laboratory chamber equipment of the present invention for solving the above problems includes: test equipment provided with a chamber for creating a test space; a time setting unit configured to input an identifier of a sample to be tested in the chamber and a test end time of the sample; a multi-timer configured to individually count a test end time for at least two or more samples, which is set by the time setting unit; and a controller configured to receive time information from the multi-timer and distinguish end times of a plurality of samples so as to provide a test end notification signal for each sample when the plurality of samples having different test end times are tested in the test equipment.

Here, the controller may be configured to transmit/receive data to/from a central server or a user terminal through wired/wireless communication.

In addition, when it is determined that the test end time of the sample has reached, the controller may be configured to notify the test end information to the user terminal that is used to test the sample.

Here, in a case in which there are a plurality of users that test the sample, the controller may be configured to distinguish the users that test the sample of which the test time is ended so as to notify the test end to the corresponding user terminal.

In addition, the user terminal may be configured to display information on test equipment, sample information, a test title, test date, and a test end time together with the notification of the test end from the controller on a screen of the user terminal.

The test equipment may further include a display, wherein a multi-timer corresponding to the sample may be displayed on the display, and a tester name of the corresponding test and an identifier of the sample together with a test time count may be displayed on the multi-timer.

In addition, when a user who is already occupying the test equipment is preset, if a login signal for another user is received, the controller may be configured to control a display to display an ID of the occupant, the test title, and the test end time on the display.

In addition, when the logged-in user receives a signal for switching the users, the controller may be configured to display test information corresponding to the switched user on the screen.

Furthermore, the server may be configured to transmit and receive data through wired or wireless communication with a plurality of pieces of test equipment so that a test end signal for the sample, which is received from each test equipment, is transmitted to the terminal of the corresponding tester.

### ADVANTAGEOUS EFFECTS

In the tests such as those in the biotechnology or pharmaceutical fields to which the present invention is applied, the test conditions for the reagents, the samples, or the raw materials and the finished products of the pharmaceuticals are mostly identical. When the test conditions are the same, if the multi-user system according to the present invention is applied, people may conduct tests simultaneously on the single test equipment, and the notification of the test end may also be sent individually. Furthermore, when integrating with the central test management system, the test end may be notified to the tester via its personal mobile phone to reduce the test burden on the tester and concentrate more fully on other tests or tasks.

### BRIEF DESCRIPTION OF THE DRAWINGS

FIG. 1 is a view illustrating a screen for requesting login information from a user in typical chamber-type test equipment.
FIG. 2 is a view illustrating an overall schematic configuration of a multi-sample test system according to an embodiment of the present invention.
FIG. 3 is a conceptual view illustrating a multi-integrated system in which the multi-sample test system is applied to a plurality of pieces of test equipment according to an embodiment of the present invention.
FIG. 4 is a view illustrating an example of chamber-type test equipment that is capable of being applied to an embodiment of the present invention.
FIG. 5 is a block diagram of a controller according to an embodiment of the present invention.
FIG. 6 is a view illustrating a screen that shows a multi-timer on a display according to an embodiment of the present invention.
FIG. 7 is a table that summarizes information stored in a memory regarding a test time of a sample tested according to an embodiment of the present invention.
FIG. 8 is a view illustrating a screen of a user terminal, which notifies a test end, according to an embodiment of the present invention.

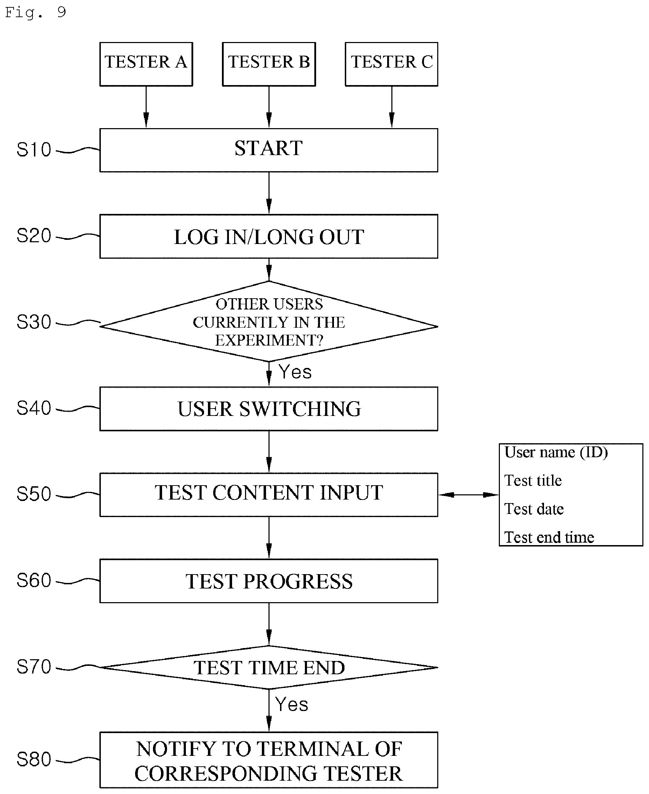

FIG. 9 is a flowchart illustrating a test process of the multi-sample test system according to an embodiment of the present invention.

### MODE FOR CARRYING OUT THE INVENTION

Since the present invention may have diverse modified embodiments, specific embodiments are illustrated in the drawings and are described in detail. However, this does not limit the present invention within specific embodiments and it should be understood that the present invention covers all the modifications, equivalents, and replacements within the idea and technical scope of the present invention. Moreover, detailed descriptions related to well-known functions or configurations will be ruled out in order not to unnecessarily obscure subject matters of the present invention.

The core technical concept of the present invention is to provide a multi-user system that enables users to conduct tests simultaneously in single test equipment by distinguishing test end time points of respective samples to notify a test end to a user's terminal that tests a corresponding sample when a plurality of samples having different test end times are simultaneously tested in one piece of test equipment.

Hereinafter, multi-user systems for increasing utilization of laboratory chamber equipment according to the present invention will be described in detail with reference to the accompanying drawings.

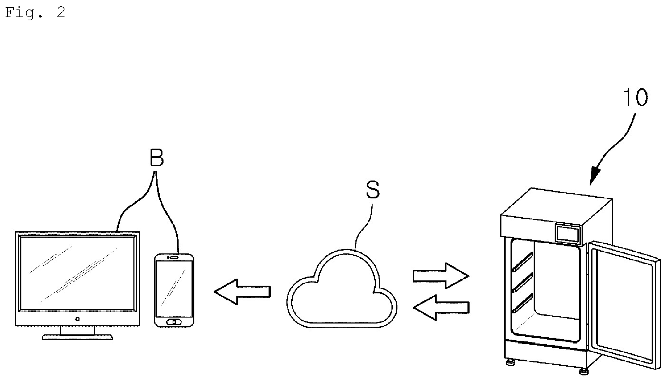

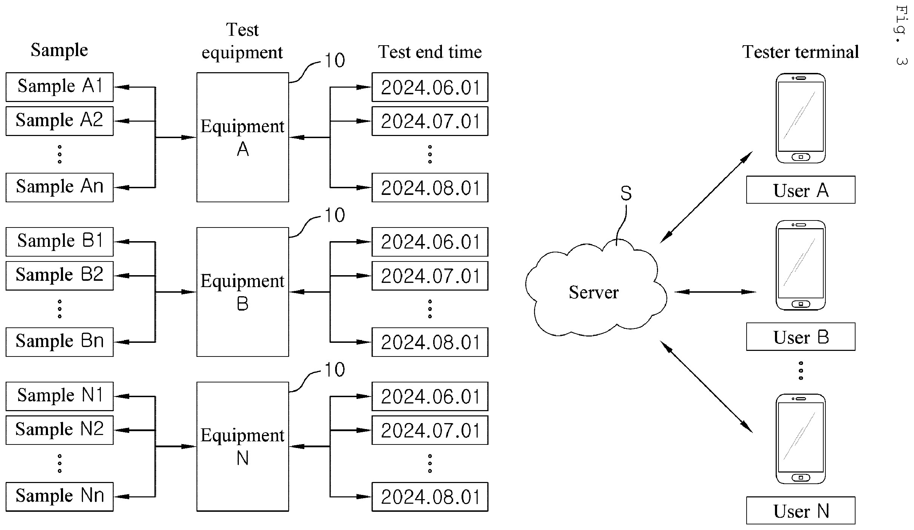

FIG. 2 is a view illustrating an overall schematic configuration of a multi-sample test system according to an embodiment of the present invention, and FIG. 3 is a conceptual view illustrating a multi-integrated system in which the multi-sample test system is applied to a plurality of pieces of test equipment according to an embodiment of the present invention.

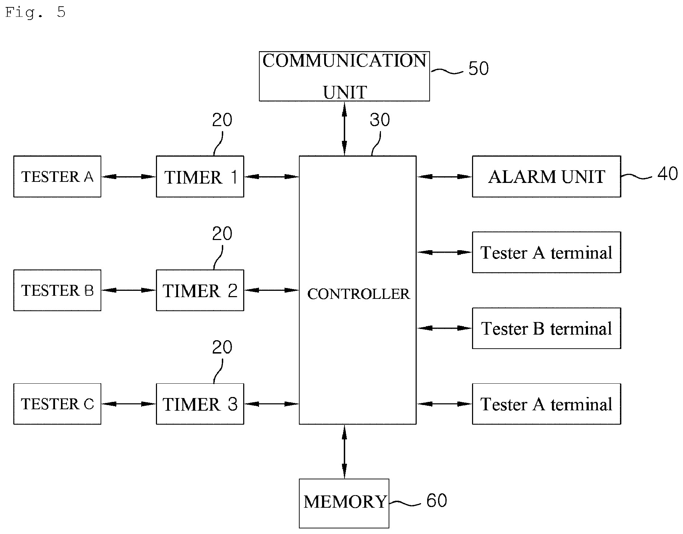

Referring to FIGS. 2 and 3, a multi-user system of laboratory chamber equipment according to the present invention basically includes one or more test equipment 10, a controller (see reference numeral 30 in FIG. 5) provided to each test equipment, a user terminal B, and a central server S, which are connected through a network so that data such as test information performed on the corresponding test equipment is transmitted and received between the pieces of equipment to computerize the data. In other words, the test equipment 10 and the user terminal B may be connected to a server (central management system, S) via a network, and the test equipment 10 and the user terminal B may also transmit/receive data to/from each other through wired/wireless communication.

Here, the user terminal B may serves as a terminal for a tester or manager, which transmits/receives information regarding test contents of the tester via the communication network. For example, the user terminal B may be implemented as an electronic device capable of performing communication, receiving an input from the tester, and outputting a screen, such as a mobile phone, a smartphone, a personal digital assistant (PDA), a tablet personal computer, a notebook, a smart watch, etc., or other similar devices.

In addition, the server S may identify current status and test status of all test equipment being conducted in the laboratory. More specifically, the management information stored in the server S may include information on laboratory equipment such as samples or reagents, types of test equipment, information on the test equipment, information on the testers, test titles, test times, test end times, and test conditions. This information may be backed up, protected against tampering, and monitored for traceability.

The communication network may be implemented using at least a portion of wired communication, wireless communication, and other communication methods, which are known to date or known in the future, such as TCP/IP, local area network (LAN), WIFI, long term evolution (LTE), wideband code division multiple access (WCDMA), Bluetooth, etc. Although many communications are performed via the communication network, in following descriptions, mention of the communication network is omitted for the sake of brevity.

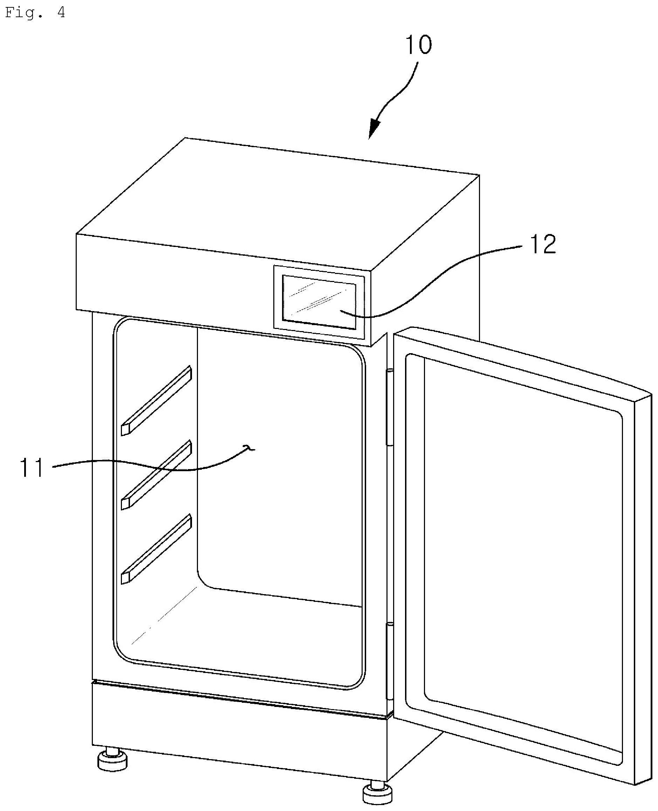

FIG. 4 is a view illustrating an example of chamber-type test equipment that is capable of being applied to an embodiment of the present invention.

The test equipment 10 illustrated in FIG. 4 is a CO₂ incubator that artificially simulates in-vivo-like environmental conditions within the chamber 11 to facilitate cell growth. However, the test equipment of the present invention is not limited thereto and may be applied to any chamber-type test equipment that has an internal test space for conducting tests on a plurality of samples simultaneously. For example, thermostatic incubators, temperature test chambers, industrial ovens, light safety test chambers, pharmaceutical safety test chambers, thermal shock test chambers, battery test chambers, etc., may be applied.

In the chamber-type test equipment 10, a sample is placed inside the chamber 11 to create environments with a certain temperature, humidity, light irradiation, etc., and bacteria are cultured for a certain period of time, or safety tests for pharmaceuticals, etc., are conducted. For this, the chamber-type test equipment may be provided with a heater, a humidifying tank, a fluorescent lamp, a UV-A lamp, etc.

Here, any sample that are used in the chamber-type test equipment is possible. For example, the sample may include biological samples for tests in biotechnology fields, pharmaceutical materials or finished products in pharmaceutical fields, as well as batteries for testing environmental reliability of products.

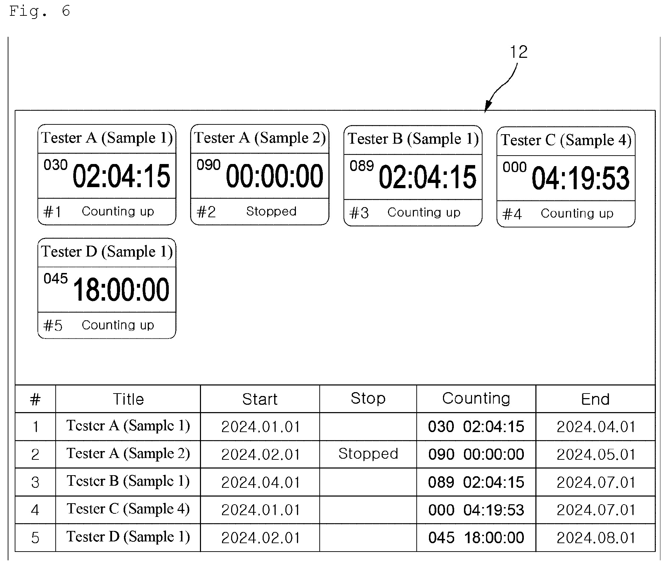

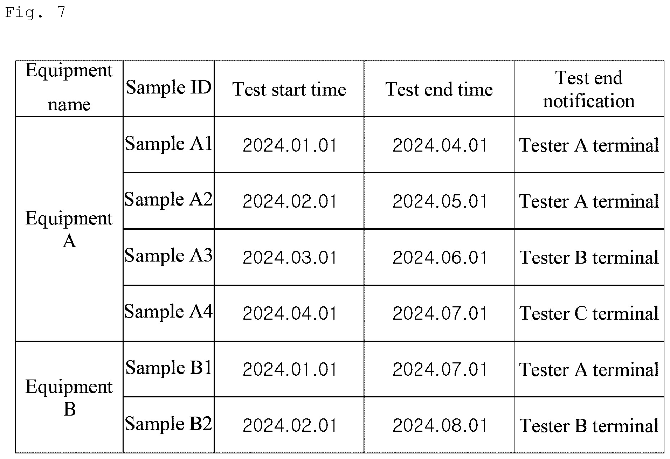

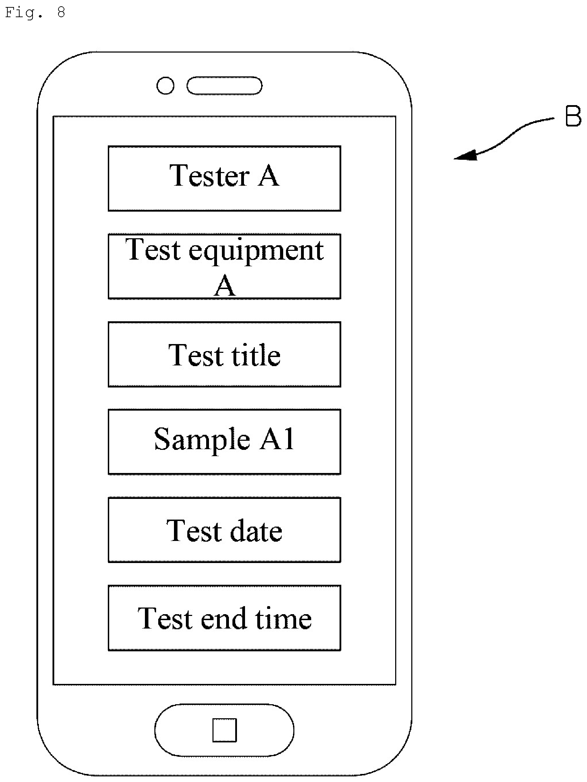

FIG. 5 is a block diagram of a controller according to an embodiment of the present invention. FIG. 6 is a view illustrating a screen that shows a multi-timer on a display according to an embodiment of the present invention. FIG. 7 is a table that summarizes information stored in a memory regarding a test time of a sample tested according to an embodiment of the present invention. FIG. 8 is a view illustrating a screen of the user terminal, which notifies a test end, according to an embodiment of the present invention.

Referring to FIGS. 3 to 8, a multi-sample test system of the chamber-type test equipment may include the test equipment 10, a display 12, a multi-timer 20, a controller 30, an alarm unit 40, a communication unit 50, and a memory 60.

The test equipment 10, which is the chamber-type test equipment, has been described in detail above, and thus, detailed descriptions are omitted herein.

The display 12 is installed on an upper portion of the test equipment 10 as an LCD panel. The display 12 performs a function of inputting or displaying the test information. In other words, the display 12 serves to visually display information related to tests to the user, and also performs a function of a control panel that inputs the information related to the tests and transmits the input information to the controller 30. In more detail, the display 12 may be used to input login information, environmental variables within the chamber (e.g., temperature, humidity, etc.), user-specific test details, test schedules, and time information related to a test end time, or may display such the information on the screen. Here, the input to the display 12 may be performed primarily by touch and may also be possible to utilize interfaces such as keyboards, voice inputs, visual sensors (e.g., barcodes, etc.), radio sensors (e.g., RFID, etc.), and MEMS sensors.

The display 12 includes a time setting unit (not shown) that inputs a test end time for the sample to be tested in the test equipment 10, and a timer 20 that counts down the test end time for the sample set by the time setting unit is displayed on the display 12.

Particularly, in the case in which samples having different test end times are simultaneously tested using the single test equipment 10, the present invention is configured to distinguish the test end time points of respective samples so as to notify the test end to the terminal of the user that tests the corresponding sample.

For this, in the present invention, a multi-timer 20 that individually inputs and counts the test end times with respect to at least two or more samples to notify the test end times.

FIG. 6 illustrates the multi-timer 20 implemented on the display 12, i.e., illustrates five timers for counting the test end times for total five samples in one piece of the test equipment. The present invention is not limited thereto, and in case in which total nine samples are tested, the multi-timer 20 may be displayed separately as nine timers.

The multi-timer 20 displays information in the form of date, time, minute, and second. In more details, the multi-timer 20 allows for setting and starting a date, time, minute, and second for the end of an test, and can count down from the set time to display the date, time, minute, and second.

Furthermore, the multi-timer 20 may include user information and sample information. In other words, the multi-timer 20 may display the information about the sample to be counted and the information about the user (tester) performing the test on the sample, together with the elapsed test time.

For example, a first timer indicates that the test on Sample 1 by a tester A is elapsed for 30 days, 2 hours, 4 minutes, and 15 seconds, and a third timer indicates that the test on Sample 1 by a tester B is elapsed for 89 days, 2 hours, 4 minutes, and 15 seconds. In the second timer, the total test time of 90 days for Sample 2 of the tester A has been ended may be indicated by displaying a letter "STOPPED".

The screen on which the multi-timer 20 is displayed may also show information about each multi-timer 20 in the form of a separate table. In more details, information on the tester, sample details, a test date, a test end time, a current test duration, and whether the test has been stopped (STOPPED) may be organized into data within a table having rows and columns and then may be displayed together with the multi-timer or optionally separately.

Here, the data of the multi-timer 20 and the table may be automatically generated when information such as a tester's name, a sample name (or sample type), a test title, a test date, and a test end time is input by the user on the user screen displayed after the user logs in. At this time, the time of the multi-timer 20 may be counted by separately pressing a start button provided on the multi-timer. In addition, the multi-timer 20 is electrically connected to the controller 30 to transmit the counted time information to the controller 30.

The alarm unit 40 outputs a notification signal visually or audibly according to an instruction from the controller 30. For example, when the alarm unit 40 includes a speaker, a guide voice may be output through the speaker with the content "The test on sample 1 of the user A has been ended and thus please confirm." It is also possible to display this content on the display 12.

The communication unit 50 transmits/receives information to/from the server S or the user terminal B via the communication network. For example, the communication unit 50 may provide the notification signal for the test end on the sample to the user terminal B according to the instruction from the controller 30. The communication technology used by the communication unit 50 may vary depending on the type of communication network or other circumstances. In this case, when a plurality of users perform the tests using the single test equipment 10, the test end may be indicated for each user, and when a single user performs the tests on the samples, the test end may be indicated for each sample.

In this regard, FIG. 8 is a view illustrating a content for notifying the test end to the user terminal B. As illustrated in FIG. 8, when the test end is notified to the user terminal B through the controller 30, the information such as the test equipment information, the tester information, the test title, the sample information, the test date, and the test end time is displayed on the screen of the user terminal B. As a result, the user may easily confirm that the test for which sample under which test equipment has been ended.

The memory 60 stores information required for an operation of the test equipment 10 or information generated during its operation. In addition, the memory 260 may store information such as the information on the tester, the test title, the sample information, the test date, and the test end time, which are input to the display 12 or the user terminal B. In addition, the memory 60 may store programs and data required to form various screens to be displayed on a specific area of the display 12. Furthermore, in the case in which the memory 60 is implemented as a combination of various devices that are physically separated from the controller 30, communication between the devices may be necessary. Hereinafter, for the sake of simplifying the description, it will be assumed that the memory 60 is implemented as one object of the controller 30.

The controller 30 may control the overall operation of the test equipment 10 and each component of the test equipment 10. In this embodiment, the controller 30 may receive the time information from the multi-timer 20 to determine the test end times for the plurality of samples. The test end time may vary depending on the sample, as described above. The test end time for each type of sample may be previously matched and stored in the memory 60.

Thus, when the plurality of samples are tested using the test equipment 10, the controller analyzes the time information counted by the multi-timer 20 and the test end time of each sample stored in the memory 60. When it is determined that a test end time of a specific sample has been reached, the controller instructs the user terminal B, which is testing the corresponding sample, to complete the test via the communication unit 50.

For example, when the controller 30 receives a signal from the second timer of FIG. 6 indicating that a test time of 90 days for Sample 2 of the tester A has been ended, it may analyze the signal with the test end time of the tester A, which is stored in the memory (as shown in FIG. 7). If it is determined that the test for Sample 2 of the tester A has been ended, the controller 30 may control the system so that the information such as the test equipment information, the tester information, the test title, the sample information, the test date, and the test end time is displayed on the screen of the terminal of the tester A.

FIG. 8 is a flowchart illustrating a test process of the multi-sample test system according to an embodiment of the present invention.

As illustrated in FIG. 8, the test process of the sample is described step by step in the system where the plurality of users simultaneously conduct the tests on one piece of the test equipment. The test step is broadly divided into a login step, a test title registration step, a test end time registration step, a user switching step, a test progress step, and a test end step.

### 1. The login step (S20) is provided as following operations:

Firstly, the user logs in through a touch screen of the display. More specifically, **i)** when performing the login, after pressing a "Login" button, a "login pop-up window" appears, and then a "user ID" and a "user password" are entered. i**i)** It is possible to log in even if another person is already logged in. **iii)** In this case, the display screen is switched to a dedicated screen for the last person who logged in. i**v)** The "user ID" is registered on a login list screen.

Next, when logging out, the sequence is the same as that for the login. More specifically, **i)** when logging out, after pressing a "logout" button, the "user ID" and "password" are entered when a "logout pop-up window" appears. i**i)** It is also possible to directly check on the login list screen to display the "logout pop-up window". i**ii)** A person who has logged out is deleted from the login list screen.

### 2. A test content registration step (S50) is as follows:

A user who is already logged in may enter the title of the test to be conducted on the display. More specifically, **i)** The registered test title is displayed on the login list screen as the "test title" together with the "user ID". i**i)** Sample information, a test date, and a test end time corresponding to that test title are set on the screen on which the "test title" is displayed.

### 3. If another user is currently in the process of performing the test, user switching operations (S30) (S40) are carried out as follows:

If there is already a user who occupies the equipment, a screen suitable for the person is displayed. That is, i) the ID of the user who occupies the equipment and the test title are displayed. ii) The end time of the user who occupies the equipment is displayed.

Thereafter, when another person who is logged in performs user switching on the login list screen, the screen is displayed according to the switched-in person.

In this case, the person who initially registers target control values (temperature, humidity, start and end of control) within the laboratory equipment chamber becomes a master, and only the master may modify the values.

### 4. The test procedure (S60) is carried out as follows:

In the test procedure, the controller provides information, which includes a user's login status, a logout status, a test title, an end time, and test conditions, in real-time to the central server connected via Internet or Intranet. Here, the central server may store and, back up the information, prevent tampering of the information, and track and observe the information.

### 5. The test end steps (S60) (S70) are classified as follows:

When the test time for a specific user is ended, the controller notifies that the test has ended and triggers an alarm in the alarm unit. Here, the user's ID, the test title, and the test time are displayed. Next, the central server notifies the user's terminal that the test has been ended. Thereafter, when all the registered tests are ended, the controller terminates its own control to stop the test equipment.

As described above, since the users conduct the tests simultaneously using the single piece of the test equipment, utilization efficiency of the test equipment may be improved. In addition, since the notification of the test end is provided individually, the tester may faithfully perform other tasks.

FIG. 3, which was briefly mentioned earlier, is a conceptual view illustrating a multi-integrated system in which the multi-user system is applied to a plurality of pieces of test equipment according to an embodiment of the present invention.

Referring to FIG. 3, the multi-user system of the present invention may be connected to one or more test equipment 10 and the plurality of user terminals B performing the tests on each test equipment 10 via the network to transmit/receive all data and information required for providing the laboratory environment. For this, the central server S may communicate with the plurality of different tester terminals B and the plurality of different test equipment 10. Thus, the testers may integrate and manage the test information on various samples tested using the plurality of pieces of the test equipment.

Although each embodiment of the present disclosure has been described above with reference to the drawings, It will be apparent to those skilled in the art that various modifications and variations can be made in the present disclosure within the scope without departing from the spirit and scope of the present disclosure as set forth in the following patent claims.

In addition, although each embodiment of the present invention is based on the multi-sample test system, the scope of the present invention is not limited thereto. In the case in which one user tests the plurality of samples having different test end times, the scope of the present invention also includes a technical feature that allows for individual notification of the test end for each sample.

### INDUSTRIAL APPLICABILITY

The present invention relates to the multi-sample test system for improving the utilization of the laboratory chamber equipment and may be widely used in the fields of the biology or pharmaceuticals, in which the tests are widely conducted using the reagents, the samples, etc.

## Claims

1. A multi-sample test system for increasing utilization of laboratory chamber equipment, the multi-sample test system comprising:
test equipment provided with a chamber for creating a test space;
a time setting unit configured to input an identifier of a sample to be tested in the chamber and a test end time of the sample;
a multi-timer configured to individually count a test end time for at least two or more samples, which is set by the time setting unit; and
a controller configured to receive time information from the multi-timer and distinguish end times of a plurality of samples so as to provide a test end notification signal for each sample when the plurality of samples having different test end times are tested in the test equipment.

2. The multi-sample test system of claim 1, wherein the controller is configured to transmit/receive data to/from a central server or a user terminal through wired/wireless communication.

3. The multi-sample test system of claim 2, wherein, when it is determined that the test end time of the sample has reached, the controller is configured to notify the test end information to the user terminal that is used to test the sample.

4. The multi-sample test system of claim 3, wherein, in a case in which there are a plurality of users that test the sample, the controller is configured to distinguish the users that test the sample of which the test time is ended so as to notify the test end to the corresponding user terminal.

5. The multi-sample test system of claim 4, wherein the user terminal is configured to display information on test equipment, sample information, a test title, test date, and a test end time together with the notification of the test end from the controller on a screen of the user terminal.

6. The multi-sample test system of claim 1, wherein the test equipment further comprises a display,
wherein a multi-timer corresponding to the sample is displayed on the display, and
a tester name of the corresponding test and an identifier of the sample together with a test time count are displayed on the multi-timer.

7. The multi-sample test system of claim 1, wherein, when a user who is already occupying the test equipment is preset, if a login signal for another user is received, the controller is configured to control a display to display an ID of the occupant, the test title, and the test end time on the display.

8. The multi-sample test system of claim 7, wherein, when the logged-in user receives a signal for switching the users, the controller is configured to display test information corresponding to the switched user on the screen.

9. The multi-sample test system of claim 1, wherein the controller is configured so that only the user who is initially registered environmental control values, such as a temperature and a humidity within the chamber, in the test equipment modifies the values.

10. The multi-sample test system of claim 2, wherein the server is configured to transmit and receive data through wired or wireless communication with a plurality of pieces of test equipment so that a test end signal for the sample, which is received from each test equipment, is transmitted to the terminal of the corresponding tester.
